# EUROPÄISCHE PATENTSCHRIFT

(11) **EP 2 322 388 B1**
(45) Veröffentlichungstag und Bekanntmachung des Hinweises auf die Patenterteilung: **18.09.2013**
(21) Anmeldenummer: 10163791.6
(22) Anmeldetag: 25.05.2010
(51) Int. Cl.: B60R 21/13

(54) **Überrollschutzsystem für Kraftfahrzeuge**
Rollover protection system for motor vehicles
Système de protection contre les tonneaux pour des véhicules automobiles

(30) Priorität: 13.11.2009 EP 09175982
(43) Veröffentlichungstag der Anmeldung: 18.05.2011
(73) Patentinhaber: Metalsa Automotive GmbH, 51702 Bergneustadt (DE)
(72) Erfinder: Nass, Michael, 51702, Bergneustadt (DE)
(74) Vertreter: Kalkoff & Partner

(56) Entgegenhaltungen:
- EP-A1- 0 657 326
- EP-A2- 1 953 045
- DE-A1- 4 426 733
- DE-A1- 19 960 764
- DE-A1-102005 052 232

## Beschreibung

Die Erfindung betrifft ein Überrollschutzsystem für Kraftfahrzeuge, mit
- einem zwischen einer Lagerungsposition und einer Überschlagsposition an einer fahrzeugfest anordbaren Halterung verstellbar gelagerten Überrollkörper und
- einer den Überrollkörper im Bedarfsfall aus der Lagerungsposition in die Überschlagsposition verstellenden Antriebseinheit.

Überrollschutzsysteme der eingangs genannten Art sind in vielfältigen Ausgestaltungen aus dem Stand der Technik bekannt. Sie dienen bei Kraftfahrzeugen wie Cabriolets oder Roadstern, bei denen das Dach zwischen einer den Innenraum überdeckenden und einer diesen freigebenden Position verstellbar ist, im Falle eines Überschlages zum Schutz der Insassen, wobei die in der Überschlagsposition aufgestellten Überrollkörper den Insassen einen Überlebensraum bereitstellen, wenn das Fahrzeug beim Überschlag auf den Überrollkörpern abrollt.

Neben starr am Fahrzeug angeordneten Überrollbügeln, welche sich sowohl über die gesamte Fahrzeugbreite erstrecken, aber auch nur jeweils hinter einem Fahrzeugsitz angeordnet sein können, werden vermehrt aktive Überrollschutzsysteme eingesetzt. Bei diesen befinden sich die Überrollkörper im Normalzustand in einer zurückgezogenen, von außen nicht sichtbaren Lagerungsposition und werden nur im Bedarfsfall, nämlich bei einem drohenden Überschlag in eine Überschlagsposition verstellt, in der sie in Verbindung mit der Karosserie einen Überlebensraum bereitstellen.

Überrollkörper, bspw. Überrollbügel, die im Normalzustand hinter den Fahrzeugsitzen von außen im Wesentlichen unsichtbar angeordnet sind und sich im Falle eines Überschlags selbsttätig aufstellen, stellen eine bevorzugte Ausführungsform der aktiven Überrollschutzsysteme dar. Zwingende Voraussetzung für die Einsetzbarkeit aller aktiven Systeme ist jedoch, dass die Überrollkörper im Bedarfsfall schnell in die die Insassen schützende Überschlagsposition verlagerbar sind.

In der DE 43 42 400 A1 ist ein weit verbreitetes Prinzip eines aktiven Überrollschutzsystems dargestellt. Dieses weist einen in einem fahrzeugfesten Kassettengehäuse geführten U-förmigen oder aus einem Profilkörper gebildeten Überrollkörper auf, der im Normalzustand gegen die Vorspannkraft einer Antriebsdruckfeder durch eine Haltevorrichtung in einer Lagerungsposition gehalten wird, und im Überschlagsfall sensorgesteuert unter Lösen der Haltevorrichtung durch die Federkraft in die Überschlagsposition gelangt.

Die DE 39 25 513 A1 offenbart eine Konstruktion von Drehbügeln, die sitzbezogen um die Fahrzeuglängsachse federvorgespannt aufschwenkbar sind. In der DE 37 32 562 C1 wird ein Überrollschutzsystem mit einem die Fahrzeugbreite überspannenden Schwenkbügel beschrieben, der im Normalfall rückwärtig im Bereich hinter den Fondsitzen brüstungsbündig ablegbar und im Gefahrenfall drehbar um eine Fahrzeug-Querachse mittels einer federbetriebenen Kolben-Zylinder-Einheit hochschwenkbar ist.

Derartige Überrollschutzsysteme, die eine Aufstellung mittels einer Federvorspannung realisieren, machen den Einsatz einer ausgeklügelten Haltevorrichtung zur Arretierung des Überrollkörpers in der Lagerungsposition erforderlich, da die Haltevorrichtung gleichzeitig derart mit einer sensorgesteuerten Entriegelungseinheit gekoppelt werden muss, die eine zuverlässige Auslösung im Falle eines drohenden Überschlages gewährleistet. Die Vorgaben bedingen hohe Entwicklungs- sowie Material- und Herstellungskosten.

Aus der DE 10 2005 052 232 A1, die den Oberbegriff des Anspruchs 1 definiert, ist ein Überrollschutzsystem für Kraftfahrzeuge bekannt, das einen in Längsrichtung ausfahrbaren Überrollkörper mit kopfseitig integriertem Airbag aufweist.

Der Erfindung liegt die Aufgabe zugrunde, ein Überrollschutzsystem der eingangs genannten Art bereitzustellen, welches sich einfach und kostengünstig herstellen lässt.

Die Erfindung löst die Aufgabe durch ein Überrollschutzsystem mit den Merkmalen des Anspruchs 1. Vorteilhafte Weiterbildungen der Erfindung sind in den abhängigen Ansprüchen angegeben.

Kennzeichnend für das erfindungsgemäße Überrollschutzsystem ist, dass der Überrollbügel als Klappbügel mit zwei einenends gelenkig miteinander verbundenen und anderenends jeweils gelenkig mit der Halterung verbundenen Bügelschenkel ausgebildet ist, wobei der Airbag derart angeordnet ist, dass er im entfalteten Zustand eine Verstellung der Bügelschenkel zueinander und gegenüber der Halterung in die Überschlagposition bewirkt und in eine durch den Überrollkörper in der Überschlagsposition aufgespannten Bereich vorsteht.

Gemäß der Erfindung ist demnach vorgesehen, dass der Airbag im entfalteten Zustand, d. h. schon bereits während dieser aufgrund seiner Ausdehnung den Überrollkörper in die Überschlagsposition verstellt oder aber zumindest nach Erreichen der Überschlagsposition in einen Bereich vorsteht, welcher durch den aufgestellten Überrollkörper aufgespannt wird. Dies ist zum einen der durch den Überrollkörper eingerahmte Bereich, kann aber nen Bereich betreffen, der sich außenseitig an den Überrollkörper anschließt. Nachdem der Überrollkörper in der Regel im Bereich hinter den Köpfen der Fahrzeuginsassen angeordnet ist, erstreckt sich der Airbag somit im entfalteten Zustand in einen Bereich - in Fahrzeugrichtung betrachtet - hinter den Köpfen der Insassen, wo dieser somit neben der Aufstellfunktion ergänzend eine Kopfschutzfunktion erfüllt.

Wesentliches Merkmal für die erfindungsgemäße Verwendung eines Airbags ist, dass in Folge des eingeleiteten Gases aus dem Gasgenerator der sich entfaltende bzw. entfaltete Airbag gegenüber dem sich in der nicht aktivierten und eingefalteten Position befindlichen Airbag einen deutlich gesteigerten bzw. erhöhten Raumbedarf benötigt. Diesen Umstand macht sich die Erfindung zu Nutze, indem die Antriebseinheit derart angeordnet ist, dass der Airbag beim Entfalten den Überrollkörper aus seiner Ruheposition herausdrängen muss, um den erforderlichen Raum einnehmen zu können. Die Wirkrichtung des Airbags beim Entfalten ist dabei dergestalt, dass der Überrollkörper aus der Lagerungsposition in die Überschlagsposition verschoben wird, um ausreichend Raum für den sich entfaltenden Airbag zu schaffen.

Unter einem Airbag wird dabei im Rahmen der Erfindung eine aufblasbare Hülle bzw. ein Luftsack verstanden, der typischerweise aus Gewebestoffen gebildet ist. Die Hülle bzw. der Luftsack befindet sich im Lagerungszustand des Überrollkörpers in einem zusammengefalteten Zustand. Beim Entfalten gelangt der Airbag mit seiner Außenfläche mit dem Überrollkörper in Wirkeingriff und durch den Entfaltungsvorgang wird der Überrollkörper in die Überschlagsposition verstellt.

Der mit dem Airbag verbundene Gasgenerator eignet sich in besonderem Maße für eine schnelle Verlagerung des Überrollkörpers in die Überschlagsposition, nachdem dieser im Falle eines drohenden Überschlags ein sich schlagartig expandierendes Gas erzeugt. Der Gasgenerator ist dabei derart mit dem Airbag verbunden, dass dieses Gas im Wesentlichen vollständig in das Innere des Airbags, bzw. der Hülle geleitet wird, so dass sich der Airbag schlagartig entfaltet und dadurch eine blitzartige Verstellung des Überrollkörpers bewirkt.

Die erfindungsgemäße Ausgestaltung des Überrollschutzsystems zeichnet sich somit insbesondere dadurch aus, dass gegenüber den aus dem Stand der Technik bekannten, federvorgespannten Überrollkörpern vollständig auf eine Entriegelungsvorrichtung zur Arretierung der Überrollkörper in der Lagerungsposition sowie auf geeignete Vorspannmittel verzichtet werden kann. Die Erfindung ermöglicht es somit, die zur Herstellung eines aktiven Überrollschutzsystems erforderlichen Bauteile in erheblicher Anzahl zu reduzieren, was eine besonders kostengünstige Herstellung eines zudem leichtgewichtigen aktiven Überrollschutzsystems ermöglicht.

Aufgrund der erfindungsgemäßen Ausgestaltung, wonach der Airbag im entfalteten Zustand in den durch den Überrollkörper in der Überschlagsposition aufgespannten Bereich vorsteht, erfüllt der Airbag zudem eine die Insassen schützende Kopfschutzfunktion, wobei der Airbag nach einer besonders vorteilhaften Weiterbildung der Erfindung in der entfalteten Lage als Kopfprallfläche ausgebildet ist, wobei hierunter eine an die Kopfform bzw. die Anforderungen an einen Kopfaufprall angepasste Ausgestaltung des Airbags verstanden wird. Insofern erfüllt der Airbag neben der Möglichkeit den Überrollkörper unverzüglich in die Überschlagsposition zu verstellen, in ergänzender Weise eine Kopfschutzfunktion. Im Zusammenwirken mit den üblicherweise am Fahrzeug befindlichen Airbags trägt das Überrollschutzsystem somit dazu bei, Verletzungen aufgrund eines Aufschlags von Körperteilen an Fahrzeugbauteilen zu verhindern, bzw. zumindest abzumildern. Nachdem der Airbag im Bereich des aufgestellten Überrollkörpers angeordnet ist, dient dieser insbesondere zur Vermeidung von Verletzungen des Kopfes.

Die Ausgestaltung des Überrollkörpers kann grundsätzlich in beliebiger Weise erfolgen, bspw. ist der Einsatz von strangartigen Profilkörpern als Überrollkörper denkbar, welche derart ausgebildet sind, dass sie die Verwendung eines Airbags zur Aufstellung ermöglichen. Nach einer besonders vorteilhaften Ausgestaltung der Erfindung ist der Überrollkörper jedoch als Überrollbügel ausgebildet und der Airbag ist in der entfalteten Lage im Bereich zwischen den Bügelschenkeln des aufgestellten Überrollbügels angeordnet. Durch diese Ausgestaltung der Erfindung, wonach der Airbag zumindest abschnittsweise in dem durch den Überrollbügel abgegrenzten Bereich angeordnet ist, sich jedoch auch auf außerhalb des Überrollbügels befindliche Bereiche erstrecken kann, wird in besonders zuverlässiger Weise gewährleistet, dass die Wirkung des Airbags beim Entfalten gleichmäßig auf den Überrollbügel übertragen wird, so dass eine unmittelbare Aufstellung realisiert werden kann. Darüber hinaus gewährleistet die Anordnung des Airbags im Bereich zwischen den Überrollbügeln, dass im Falle eins Überschlags der Airbag besonders wirkungsvoll eine Kopfschutzfunktion erfüllen kann, nachdem er unmittelbar im Kopfbereich des Fahrers bzw. Beifahrers angeordnet ist. Darüber hinaus wirken die Innenseiten des Überrollbügels stabilisierend auf den entfalteten Airbag.

Nach einer besonders vorteilhaften Ausgestaltung der Erfindung überdeckt der Airbag im entfalteten Zustand die Bügelschenkel des aufgestellten Überrollbügels mindestens abschnittsweise. Durch diese Ausgestaltung der Erfindung kann in ergänzender Weise die Kopfschutzfunktion des entfalteten Airbags gesteigert werden, nachdem dieser Anschläge des Kopfes an den Überrollbügel mit damit möglicherweise einhergehenden Verletzungen verhindert.

Eine weitergehende Steigerung der Kopfschutzfunktion kann ferner gemäß einer weiteren Ausgestaltung der Erfindung dadurch erreicht werden, dass der Airbag im entfalteten Zustand von einer durch die Bügelschenkel aufgespannten Ebene vorsteht, wobei gemäß dieser Ausgestaltung von einer Orientierung in Richtung auf die Fahrzeuginsassen ausgegangen wird, so dass ein zusätzlicher Dämpfungsbereich geschaffen werden kann, welcher in ergänzender Weise die Schwere von Kopfverletzungen verhindert.

Der Überrollbügel kann grundsätzlich einstückig und linear verschiebbar an der Halterung gelagert sein. Nach einer Weiterbildung der Erfindung ist der Überrollbügel jedoch als Klappbügel mit zwei einenends gelenkig miteinander und anderenends jeweils gelenkig mit der Halterung verbundenen Bügelschenkeln ausgebildet. Ein entsprechendes Überrollschutzsystem weist den Vorteil auf, dass es aufgrund des Klappbügels in der Ruhelage einen nur sehr geringen Bauraum beansprucht. Die Ausgestaltung der gelenkigen Verbindung der Bügelschenkel miteinander sowie mit der Halterung hängt dabei von der Funktionsweise des Klappbügels ab. So ist eine Ausgestaltung denkbar, bei der beide Bügelschenkel einenends drehgelenkig mit der Halterung verbunden und anderenends aneinander verschiebbar gelagert sind, so dass eine scherenartige Aufstellung des Klappbügels aus der Lagerungsposition in die Überschlagsposition erfolgt. Nach einer alternativen Ausgestaltung ist auch ein Aufbau des Klappbügels denkbar, bei der die Bügelschenkel einenends miteinander sowie ein Bügelschenkel anderenends mit der Halterung drehgelenkig und der andere Bügelschenkel anderenends verschiebbar an der Halterung gelagert ist. In jedem Fall die Aufstellbewegung der Bügelschenkel aus der Lagerungsposition in die Überschlagsposition aufgrund des Zusammenwirkens des Airbags mit dem oder den Bügelschenkeln. Aufgrund des nur geringen Bauraums des Airbags in der eingefalteten Lage kann in Verbindung mit der Ausgestaltung des Überrollbügels als Klappbügel ein Überrollschutzsystem mit einem nur sehr geringen Bauraum gebildet werden.

Die Anordnung des Airbags derart, dass der Klappbügel aus der Lagerungsposition in die Überschlagsposition verstellt wird, kann grundsätzlich in beliebiger Weise erfolgen. Nach einer besonders vorteilhaften Ausgestaltung ist jedoch vorgesehen, dass der Airbag mit einem Bügelschenkel in Eingriff bringbar innerhalb eines Bügelschenkels und/oder der Halterung geführt ist. Gemäß dieser Ausgestaltung der Erfindung, wonach sich die Hauptexpansionsrichtung des Airbags innerhalb der durch den Bügelschenkel und/oder die Halterung gebildeten Führung erstreckt, gewährleistet in besonders zuverlässiger Weise eine unverzügliche Aufstellung des Klappbügels in die Überschlagsposition. Dabei ist der Airbag darüber hinaus derart ausgebildet, dass er in den durch den Klappbügel abgegrenzten Bereich vorsteht, um so in ergänzender Weise die Kopfschutzfunktion zu erfüllen. Hierzu ist nach einer besonders vorteilhaften Weiterbildung der Erfindung vorgesehen, dass der Airbag zwischen den Bügelschenkeln des Klappbügels angeordnet ist.

Ein Ausführungsbeispiel der Erfindung wird nachstehend mit Bezug auf die Zeichnungen erläutert. In den Zeichnungen zeigen:
- Fig. 1: eine Skizze einer Vorderansicht eines Überrollschutzsystems mit einem teilauf- geklappten Klappbügel;
- Fig. 2: eine Skizze einer Seitenansicht des Überrollschutzsystems von Fig. 1 in der teil- aufgeklappten Lage;
- Fig. 3: eine Skizze einer Vorderansicht des Überrollschutzsystems von Fig. 1 in einer Überschlagsposition und
- Fig. 4: eine Skizze einer Seitenansicht des Überrollschutzsystems von Fig. 1 in der Überschlagsposition;

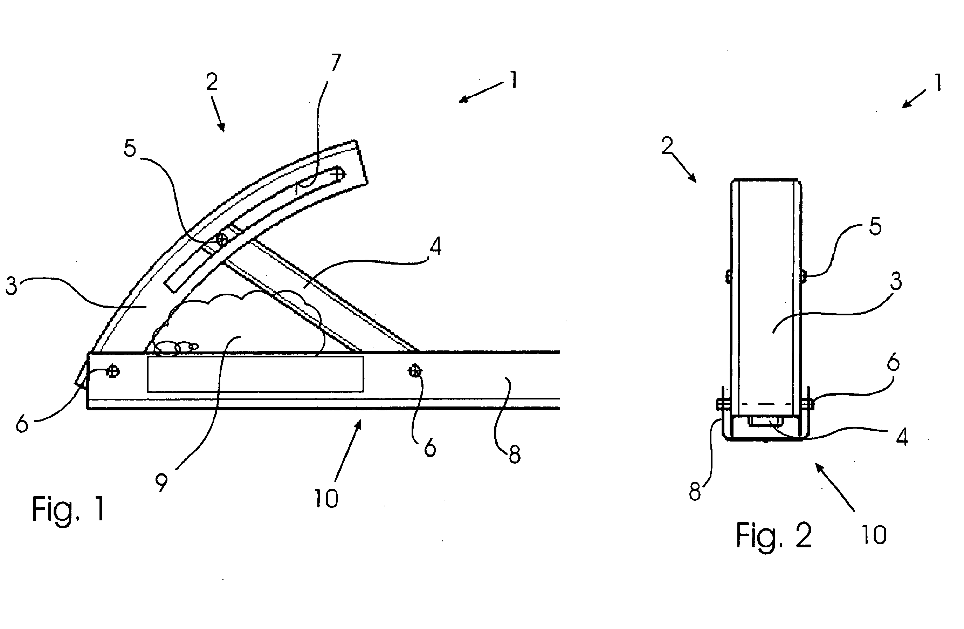

Das in den Figuren 1-4 dargestellte Überrollschutzsystem 1 weist einen aus einem ersten Bügelschenkel 3 und einem zweiten Bügelschenkel 4 gebildeten Überrollbügel 2 auf. Der erste und zweite Bügelschenkel 3, 4 sind jeweils über Lagerstifte 6 gelenkig mit einem Träger 8 einer Halterung 10 verbunden. Um eine Aufstellbewegung des Überrollbügels 2 zu ermöglichen, weist der zweite Bügelschenkel 4 an seinem der Halterung 8 abgewandten Ende einen Führungsbolzen 5 auf, welcher sich verschiebbar in einer Kulisse 7 des ersten Bügelschenkels 3 erstreckt.

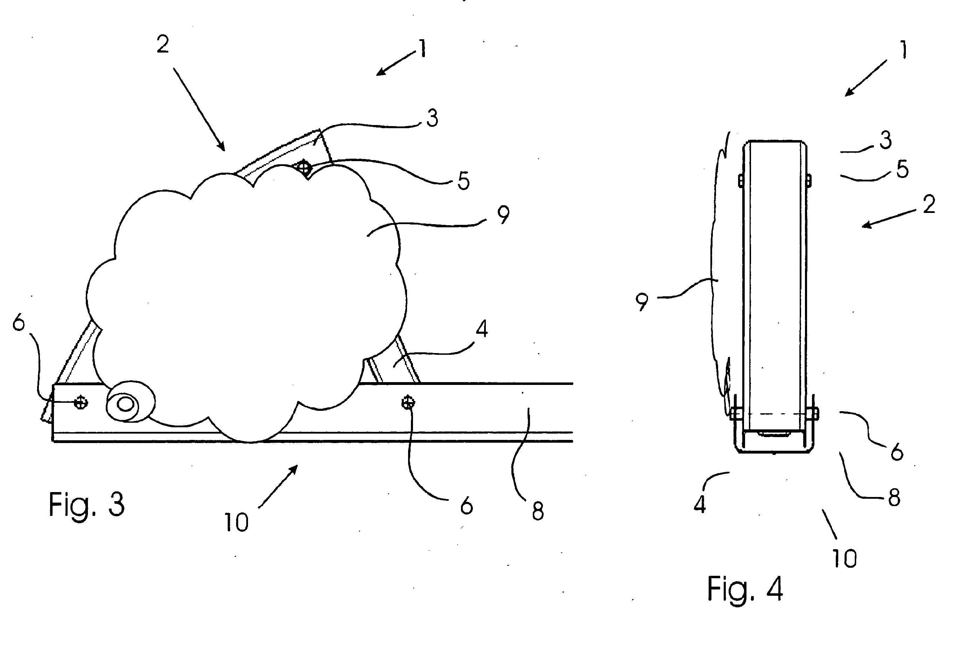

Eine Aufstellung des Überrollbügels 2 aus einer hier nicht dargestellten Ruheposition über die in Fig. 1 und 2 dargestellte Zwischenposition in die in Fig. 3 und 4 dargstellte Überschlagsposition erfolgt über einen Airbag 9, welcher derart an der Halterung 8 angeordnet ist, dass dieser bei seiner Expansion an dem ersten und zweiten Bügelschenkel 3, 4 zur Anlage kommt und diese in die in Fig. 3 und 4 dargestellte Überschlagsposition verschiebt. Darüber hinaus ist der Airbag 9 in der Überschlagsposition - bezogen auf die Einbaulage - in Fahrzeugrichtung gesehen vor dem Überrollbügel 2 angeordnet, und bietet so eine Kopfschutzfunktion in dem der Airbag 9 als Prallfläche dient. Der Airbag 9 ist dabei derart ausgebildet, dass er über einen durch die Bügelschenkel 3, 4 abgegrenzten Bereich hinausragt, so dass Anschläge eines Kopfes auf die Bügelschenkel 3, 4 besonders wirksam verhindert werden können.

## Patentansprüche

1. Überrollschutzsystem (1) für Kraftfahrzeuge, mit
- einem zwischen einer Lagerungsposition und einer Überschlagsposition an einer fahrzeugfest anordbaren Halterung (10) verstellbar gelagerten Überrollkörper und
- einer den Überrollkörper im Bedarfsfall aus der Lagerungsposition in die Überschlagsposition verstellenden Antriebseinheit, wobei der Überrollkörper als Überrollbügel (2) ausgebildet ist und die Antriebseinheit einen mittels eines Gasgene-rators entfaltbaren und dabei mit dem Überrollkörper (2) in Wirkverbindung stehenden und diesen in die Überschlagsposition verstellenden Airbag (9) aufweist,
**dadurch gekennzeichnet, dass**
der Überrollbügel als Klappbügel (2) mit zwei einenends gelenkigen miteinander und anderenends jeweils gelenkig mit der Halterung (10) verbundenen Bügelschenkel (3, 4) ausgebildet ist
wobei der Airbag (9) derart angeordnet ist, dass er im entfalteten Zustand eine Verstellung der Bügelschenkel (3,4) zueinander und gegenüber der Halterung (10) in die Überschlagsposition bewirkt und der in entfalteter Lage in einen über den durch den Überrollkörper (2) in der Überschlagsposition aufgespannten Bereich vorsteht.

2. Überrollschutzsystem für Kraftfahrzeuge nach Anspruch 1, **dadurch gekennzeichnet, dass** der Airbag (9) in der entfalteten Lage als Kopf-Prallfläche ausgebildet ist.

3. Überrollschutzsystem für Kraftfahrzeuge nach Anspruch 1 oder 2, **dadurch gekennzeichnet, dass** der Airbag (9) in der entfalteten Lage im Bereich zwischen den Bügelschenkeln (3, 4) des aufgestellten Überrollbügels (2) angeordnet ist.

4. Überrollschutzsystem für Kraftfahrzeuge nach einem der vorhergehenden Ansprüche, **dadurch gekennzeichnet, dass** der Airbag (9) im entfalteten Zustand die Bügelschenkel (3, 4) des aufgestellten Überrollbügels (2) mindestens abschnittsweise überdeckt.

5. Überrollschutzsystem für Kraftfahrzeuge nach einem der vorhergehenden Ansprüche, **dadurch gekennzeichnet, dass** der Airbag (9) im entfalteten Zustand von einer durch die Bügelschenkel (3, 4) aufgespannten Ebene vorsteht.

6. Überrollschutzsystem nach einem der vorhergehenden Ansprüche, **dadurch gekennzeichnet, dass** der Airbag (9) mit einem Bügelschenkel (4) in Eingriff bringbar innerhalb eines Bügelschenkels (3) und/oder der Halterung (10) geführt ist.

7. Überrollschutzsystem nach einem der vorhergehenden Ansprüche, **dadurch gekennzeichnet, dass** der Airbag (9) derart angeordnet ist, dass er die Bügelschenkel (3, 4) des in der Lagerungsposition zusammengelegten Klappbügels (2) derart auseinanderklappt, dass dieser in die Überschlagsposition gelangt.

8. Überrollschutzsystem nach einem der vorhergehenden Ansprüche, **dadurch gekennzeichnet, dass** der Airbag (9) zwischen den Bügelschenkeln (3, 4) des Klappbügels (2) angeordnet ist.

## Claims

1. A rollover protection system (1) for motor vehicles, with
- a rollover body adjustably mounted between a support position and a rollover position on a holder (10) permanently arrangeable on the vehicle and
- a drive unit displacing the rollover body when needed out of the support position into the rollover position, wherein the rollover body is designed as a rollover bar (2) and the drive unit has an airbag (9) that is deployable by means of a gas generator and that is thereby operatively connected with the rollover body (2) and displaces it into the rollover position,
**characterized in that**
the rollover bar is designed as a folding bar (2) with two bar arms (3, 4) connected with each other in a hinged manner on one end and respectively hinged with the holder (10) on the other end, wherein the airbag (9) is arranged such that it causes a displacement of the bar arms (3, 4) with respect to each other in the deployed state and into the rollover position with respect to the holder (10) and which protrudes in the deployed position into an area tensioned by the rollover body (2) in the rollover position.

2. The rollover protection system for motor vehicles according to claim 1, **characterized in that** the airbag (9) is designed in the deployed position as a head impact surface.

3. The rollover protection system for motor vehicles according to claim 1 or 2, **characterized in that** the airbag (9) in the deployed position is arranged in the area between the bracket arms (3, 4) of the erected rollover bar (2).

4. The rollover protection system for motor vehicles according to one of the preceding claims, **characterized in that** the airbag (9) in the deployed state covers the bar arms (3, 4) of the erected rollover bar (2) at least in sections.

5. The rollover protection system for motor vehicles according to one of the preceding claims, **characterized in that** the airbag (9) in the deployed state protrudes from a plane tensioned by the bar arms (3, 4).

6. The rollover protection system according to one of the preceding claims, **characterized in that** the airbag (9) is guided within a bar arm (3) and/or the holder (10) engageable with a bar arm (4).

7. The rollover protection system according to one of the preceding claims, **characterized in that** the airbag (9) is arranged such that it unfolds the bar arms (3, 4) of the folding bar (2) folded up in the support position such that it reaches the rollover position.

8. The rollover protection system according to one of the preceding claims, **characterized in that** the airbag (9) is arranged between the bar arms (3, 4) of the folding bar (2).

## Revendications

1. Système de protection contre les tonneaux (1) pour des véhicules automobiles, comprenant
- un corps de protection contre les tonneaux monté réglable sur un support (10) pouvant être disposé fixement sur le véhicule entre une position de rangement et une position de retournement et
- une unité de commande réglant le corps de protection contre les tonneaux si nécessaire de la position de rangement à la position de retournement, le corps de protection contre les tonneaux se présentant sous la forme d'un étrier de protection contre les tonneaux (2) et l'unité de commande présentant un airbag (9) dépliable au moyen d'un générateur à gaz et qui est en relation active avec le corps de protection contre les tonneaux (2) et déplace celui-ci dans la position de retournement,
**caractérisé en ce que**
l'étrier de protection contre les tonneaux se présente sous la forme d'un étrier rabattable (2) avec deux branches d'étrier (3, 4) reliées l'une à l'autre de manière articulée à une extrémité et reliées de manière articulée au support (10) à l'autre extrémité, l'airbag (9) étant disposé de telle sorte qu'il provoque à l'état déplié un déplacement des branches d'étrier (3, 4) les unes par rapport aux autres et par rapport au support (10) dans la position de retournement, et lequel airbag fait saillie à l'état déplié dans une zone fixée par le corps de protection contre les tonneaux (2) dans la position de retournement.

2. Système de protection contre les tonneaux pour des véhicules automobiles selon la revendication 1, **caractérisé en ce que** l'airbag (9) se présente à l'état déplié sous la forme d'une surface de rebondissement de la tête.

3. Système de protection contre les tonneaux pour des véhicules automobiles selon les revendications 1 ou 2, **caractérisé en ce que** l'airbag (9) dans la position dépliée est disposé dans la zone entre les branches d'étrier (3, 4) de l'étrier de protection contre les tonneaux (2) en position.

4. Système de protection contre les tonneaux pour des véhicules automobiles selon une des revendications précédentes, **caractérisé en ce que** l'airbag (9) à l'état déplié recouvre au moins par secteurs les branches d'étrier (3, 4) de l'étrier de protection contre les tonneaux (2) en position.

5. Système de protection contre les tonneaux pour des véhicules automobiles selon une des revendications précédentes, **caractérisé en ce que** l'airbag (9) à l'état déplié dépasse d'un plan fixé par les branches d'étrier (3, 4).

6. Système de protection contre les tonneaux selon une des revendications précédentes, **caractérisé en ce que** l'airbag (9) peut être amené en prise avec une branche d'étrier (4) et est guidé à l'intérieur d'une branche d'étrier (3) et/ou du support (10).

7. Système de protection contre les tonneaux selon une des revendications précédentes, **caractérisé en ce que** l'airbag (9) est agencé de telle sorte qu'il déploie les branches d'étrier (3, 4) de l'étrier rabattable (2) plié dans la position de rangement de telle sorte que celui-ci atteint la position de retournement.

8. Système de protection contre les tonneaux selon une des revendications précédentes, **caractérisé en ce que** l'airbag (9) est agencé entre les branches d'étrier (3, 4) de l'étrier rabattable (2).
